(19) Europäisches Patentamt / European Patent Office / Office européen des brevets

(11) EP 4 667 325 A1

(12) EUROPEAN PATENT APPLICATION
published in accordance with Art. 153(4) EPC

(43) Date of publication:
24.12.2025  Bulletin 2025/52

(21) Application number: 24784684.3

(22) Date of filing: 12.03.2024

(51) International Patent Classification (IPC):
**B62D 21/00** (2006.01)

(52) Cooperative Patent Classification (CPC):
**B62D 21/11; B62D 21/00**

(86) International application number:
**PCT/JP2024/009544**

(87) International publication number:
**WO 2024/209889 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  03.04.2023  JP 2023059963

(71) Applicant: **JFE Steel Corporation
Tokyo 100-0011 (JP)**

(72) Inventor: **YAMAGUCHI, Naoki
Tokyo 100-0011 (JP)**

(74) Representative: **Hoffmann Eitle
Patent- und Rechtsanwälte PartmbB
Arabellastraße 30
81925 München (DE)**

(54) **SUB-FRAME STRUCTURE OF AUTOMOBILE**

(57)    A sub-frame structure 1 of an automobile according to the present invention includes a pair of side members 10 at left and right and a cross member 20. The cross member 20 includes a substantially rectangular cross-section hollow member 21 disposed on a straight line connecting suspension arm connecting portions 11 at left and right on a vehicle front side, and a panel member 23 formed in a panel shape from one metal sheet, disposed rearward of the substantially rectangular cross-section hollow member 21, and having rear ends 23a1 of both side edges 23a located rearward of suspension arm connecting portions 13 on the vehicle rear side. The panel member 23 includes a bead portion 25 convexly curved from the vehicle rear side to the vehicle front side toward a center in a vehicle width direction. The bead portion 25 is formed such that a bead width gradually increases from the center to both ends of the curve.

FIG.1

EP 4 667 325 A1

## Description

Field

The present invention relates to an automotive sub-frame structure in which stiffness against various loads input from a suspension arm and other automotive parts during traveling is improved.

Background

A body of an automobile includes a sub-frame that couples a suspension arm and the body. The sub-frame generally has a structure in which both ends of a cross member extending in a vehicle width direction are connected to a pair of left and right side members extending in a vehicle front-rear direction. There are a sub-frame having a parallel cross beam shape in a top view in which two cross members spaced apart from each other are provided in the vehicle front-rear direction, and a sub-frame having an H-shape in a top view in which one cross member is provided on a vehicle rear side. In addition, the side members and the cross members are not limited to separate parts connected by another part. There are also integrated side member and cross member.

The sub-frame is deformed not only by a load input from the suspension arm during traveling of the vehicle but also by loads input from an automotive part attached to the sub-frame, such as a stabilizer and a steering gear box, and attachment portions with the automotive body, and thus high stiffness is required. An increase in stiffness of the sub-frame leads to improvement of ride comfort, thereby improving the value of the automobile.

In addition, in the case of a gasoline powered automobile, the sub-frame is generally arranged avoiding an engine, but in the case of a battery electric vehicle, there is no need of avoidance. However, since the battery electric vehicle needs to be equipped with a battery, a vehicle weight increases. Therefore, the sub-frame of the battery electric vehicle is required to have a structure with higher stiffness.

Up to now, for example, as disclosed in Patent Literatures 1 to 3, some techniques related to performance and a structure required for an automotive sub-frame structure have been proposed.

Citation List

Patent Literature

Patent Literature 1: JP 2020-50213 A
Patent Literature 2: JP 2022-074054 A
Patent Literature 3: JP 2020-164094 A

Summary

Technical Problem

As described above, an automotive sub-frame is required to have high stiffness against loads in various directions input from other automotive parts mounted on the sub-frame or attachment portions with the automotive body in addition to a load input from the suspension arm during traveling. In particular, the sub-frame of a battery electric vehicle is also required to be lightweight from the viewpoint of energy efficiency of the automobile. In order to reduce the weight of the sub-frame, it is effective to reduce a sheet thickness in the case of manufacturing the sub-frame by press forming of a metal sheet. However, when the sheet thickness is thinned, the stiffness is generally reduced, and therefore high stiffness and weight reduction are in a trade-off relationship. Still more, examples of car performance that deteriorates when the sheet thickness is thinned are crashworthiness, deformation strength when a single load is input, and fatigue strength. Deterioration can be solved by applying a metal material having high strength. However, in a general metal material, an elastic coefficient hardly changes even when the strength is increased, and therefore high stiffness of the metal material by increasing its strength cannot be expected.

As described above, in the automotive sub-frame (particularly for a battery electric vehicle), a structure that achieves high stiffness regardless of the strength of a metal material is required. However, the sub-frames disclosed in Patent Literatures 1 and 2 improve crashworthiness assuming a front crash of a vehicle, and do not improve the stiffness against loads in various directions input from the suspension arm and other automotive parts during traveling.

Still more, in the sub-frame disclosed in Patent Literature 3, a first side member and a second side member are connected in a bracing structure by a connecting member provided while being separated from the cross member on the rear side of the automotive body. According to Patent Literature 3, the strength and stiffness of the sub-frame can be enhanced by the connecting member.

However, in the sub-frame of Patent Literature 3, a large space exists between the cross member on a vehicle front side and the connecting member on a vehicle rear side. Therefore, it is not possible to sufficiently improve the stiffness against loads in various directions input from other automotive parts mounted on the sub-frame and the attachment portions with the automotive body.

The present invention has been made to solve the above problems, and an object of the present invention is to provide an automotive sub-frame structure having high stiffness against loads in various directions input from other automotive parts and attachment portions with the automotive body in addition to a load input from the suspension arm.

Solution to Problem

An automotive sub-frame structure according to the present invention includes: a pair of side members at left and right extending in a vehicle front-rear direction, each including suspension arm connecting portions at two positions in the vehicle front-rear direction; and a cross member extending in a vehicle width direction and having both ends connected to the side members at left and right, wherein the cross member includes: a substantially rectangular cross-section hollow member that is hollow and has a substantially rectangular cross section, the substantially rectangular cross-section hollow member being disposed on a straight line connecting the suspension arm connecting portions at left and right on a vehicle front side, and a panel member formed in a panel shape from a metal sheet, disposed rearward of the substantially rectangular cross-section hollow member, and having side edges connected to the side members at left and right such that rear ends of the side edges in the vehicle width direction are located rearward of the suspension arm connecting portions on a vehicle rear side, the panel member includes a bead portion that is convexly curved to the vehicle front side from rearward of the suspension arm connecting portions on the vehicle rear side toward a center in the vehicle width direction, and the bead portion is formed such that a bead width gradually increases from a center of the curve toward both ends.

The panel member may have a rear edge that is convexly curved to the vehicle front side from both ends toward the center in the vehicle width direction, and the bead portion may be formed along the rear edge.

Each of the side members may have a front end provided with a bending protrusion that is hollow and protruding to the vehicle front side beyond the substantially rectangular cross-section hollow member, the bending protrusion being bent in a crank shape while inclining outward in the vehicle width direction.

The bending protrusion may have an opening formed in a side surface on a vehicle outer side at an inclined portion inclined outward in the vehicle width direction.

The bending protrusion may have a hollow cross-section occlusion vertical wall provided on an inner surface side of a valley portion on a vehicle inner side, the hollow cross-section occlusion vertical wall connecting a top surface and a bottom surface of the bending protrusion to close a part or all of a hollow cross-section.

The cross member may be formed of a steel sheet having a tensile strength of 590 MPa class or more.
Advantageous Effects of Invention

According to an automotive sub-frame structure according to the present invention, stiffness against loads in various directions input from other automotive parts and attachment portions with an automotive body, in addition to a load input from a suspension arm, can be enhanced during traveling of the vehicle.

Further, in the automotive sub-frame structure according to the present invention, a side member is provided with a bending protrusion that protrudes toward a vehicle front side from a cross member and is bent in a crank shape inclined outward in a vehicle width direction. As a result, in a stage of transient elastic deformation at the initial stage of crash until plastic deformation occurs in the side member at the time of front crash of the vehicle, plastic deformation in which the bending protrusion is crushed in a bellows-shaped manner occurs, thereby crashworthiness energy can be absorbed. Furthermore, in the automotive sub-frame structure according to the present invention, the bending protrusion in a vehicle front-rear direction may be set to a length necessary for absorbing the crashworthiness energy at the initial stage of crash, and thus the present invention can also be applied to a battery electric vehicle or the like in which a trend of shorter nose at the vehicle front is progressing.

Brief Description of Drawings

[FIG. 1] FIG. 1 is a top view illustrating a configuration of an automotive sub-frame structure according to a first embodiment of the present invention.
[FIG. 2] FIG. 2 is a diagram illustrating an input load mode in a sub-frame structure examined in a background to the present invention and stiffness investigation in Examples.
[FIG. 3] FIG. 3 is a cross-sectional view illustrating a specific example of a panel member of a cross member in the automotive sub-frame structure according to the first embodiment of the present invention.

[FIG. 4] FIG. 4 is a top view illustrating an example of a stiffening bead portion formed additionally to the panel member in the automotive sub-frame structure according to the first embodiment of the present invention.

[FIG. 5] FIG. 5 is a top view illustrating another specific example of a suspension arm connecting portion provided on the side member in the automotive sub-frame structure according to the first embodiment of the present invention.

[FIG. 6] FIG. 6 is a top view illustrating an automotive sub-frame structure according to a second embodiment of the present invention.

[FIG. 7] FIG. 7 is a diagram illustrating a bending protrusion in the automotive sub-frame structure according to the second embodiment of the present invention ((a) Top view and (b) Side view).

[FIG. 8] FIG. 8 is a diagram illustrating a deformation behavior of the bending protrusion obtained by a front crashworthiness analysis of a vehicle including the automotive sub-frame structure according to the second embodiment of the present invention (Part 1: (a) At start of collision, (b) Rigid wall entering amount: 4 mm, and (c) Entering amount: 20 mm).

[FIG. 9] FIG. 9 is a diagram illustrating a deformation behavior of the bending protrusion obtained by the front crashworthiness analysis of the vehicle including the automotive sub-frame structure according to the second embodiment of the present invention (Part 2: (d) Rigid wall entering amount: 40 mm and (e) Entering amount: 80 mm).

[FIG. 10] FIG. 10 is a diagram illustrating a hollow cross-section occlusion vertical wall provided inside the bending protrusion provided at a front end of a side member in an automotive sub-frame structure according to the present invention.

[FIG. 11] FIG. 11 is a diagram illustrating an example of a patch part provided as the hollow cross-section occlusion vertical wall inside the bending protrusion in the automotive sub-frame structure according to the present invention.

[FIG. 12] FIG. 12 is a diagram illustrating an example of a reinforcement part provided at a front end of the side member as a part of the bending protrusion in the automotive sub-frame structure according to the present invention.

[FIG. 13] FIG. 13 is a diagram illustrating a sub-frame structure investigated for stiffness in Example 1 ((a) Invention Example 1, (b) Comparative Example).

[FIG. 14] FIG. 14 is an enlarged view illustrating the bending protrusion provided at the front end of the side member in a sub-frame structure investigated for crashworthiness in an example ((a) Only a hollow bending protrusion, (b) a patch part is installed inside the bending protrusion, and (c) a reinforcement part is bonded to a front end of the side member having a vertical wall formed at a front end).

[FIG. 15] FIG. 15 is a graph of a load-displacement curve obtained by the crashworthiness analysis of a vehicle having a sub-frame structure according to Invention Examples 2 to 4 in Example 2.

Description of Embodiments

[Background to Invention]

The inventor has intensively studied a sub-frame structure for improving stiffness, assuming traveling of an automobile.

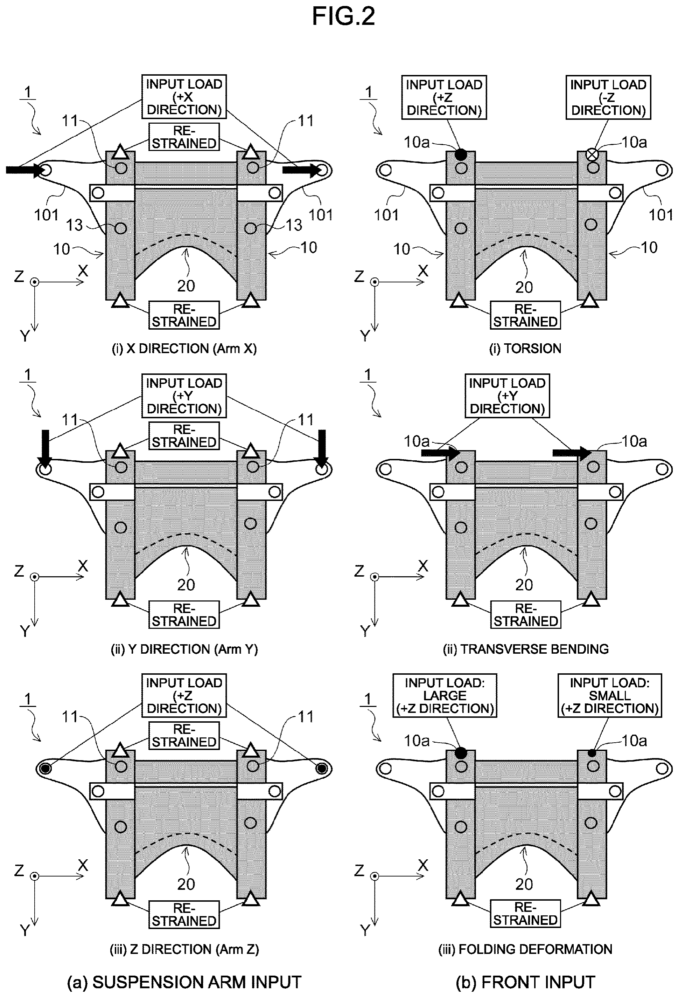

The study targeted on a sub-frame structure 1 including left and right side members 10 and a cross member 20 as illustrated in FIG. 2. A stiffness of the sub-frame structure 1 was evaluated for an input load mode (FIG. 2(a)) in which a load is input to suspension arm connecting portions 11 and 13 and an input load mode (FIG. 2(b)) in which a load is input to a front end 10a of a side member 10 that is an attachment portion to an automotive body.

As illustrated in FIGS. 2(a) (i) to (iii), the input load modes to the suspension arm connecting portions 11 and 13 are three patterns in which directions of a load input to a suspension arm 101 are different. FIG. 2(a) (i) illustrates a mode in which a load is input rightward in a vehicle width direction, FIG. 2(a) (ii) illustrates a mode in which a load is input rearward in a vehicle front-rear direction, and FIG. 2(a) (iii) illustrates a mode in which a load is input upward in a vehicle vertical direction.

As illustrated in FIGS. 2(b) (i) to (iii), the input load mode to the attachment portion (the front end 10a of the side member 10) with the automotive body is set to three patterns in which a magnitude and direction of the load input to each of the front end 10a of the left and right side members 10 are different. FIG. 2(b) (i) illustrates an input load mode (torsion) in a direction opposite to the vehicle upward direction and the vehicle downward direction, FIG. 2(b) (ii) illustrates an input load mode (transverse bending) in one direction in the vehicle width direction, and FIG. 2(b) (iii) illustrates an input load mode (folding deformation) having different magnitudes in the vehicle upward direction.

As a result of studying the stiffness of the sub-frame structure 1 with respect to these input load modes, it has been found that the following (1) to (3) are valid in effectively improving the stiffness of the sub-frame structure 1.

(1) As the cross member 20 connecting the left and right side members 10, providing a substantially rectangular cross-section hollow member having a substantially rectangular cross section with a high geometrical moment of inertia on a straight line connecting the left and right suspension arm connecting portions 11 on the vehicle front side

(2) Further, as the cross member 20, providing a panel member rearward of the substantially rectangular cross-section hollow member to connect a side edge in the vehicle width direction to rearward of the suspension arm connecting portion on the vehicle rear side in the side member 10

(3) For the panel member, providing a bead portion curved in a convex shape toward the vehicle front side in a top view, and gradually increasing a bead width toward both ends in the vehicle width direction.

It has been found that providing the above (1) to (3) is particularly valid against the input load modes (FIG. 2(b) (i) Torsion, (iii) Folding deformation) in which the entire sub-frame structure 1 is bent out-of-plane, and the input load mode (FIG. 2(b) (ii) Transverse bending) in which the entire sub-frame structure 1 is bent in-plane.

The present invention has been made based on the above study, and a configuration thereof will be described below.

[First embodiment]

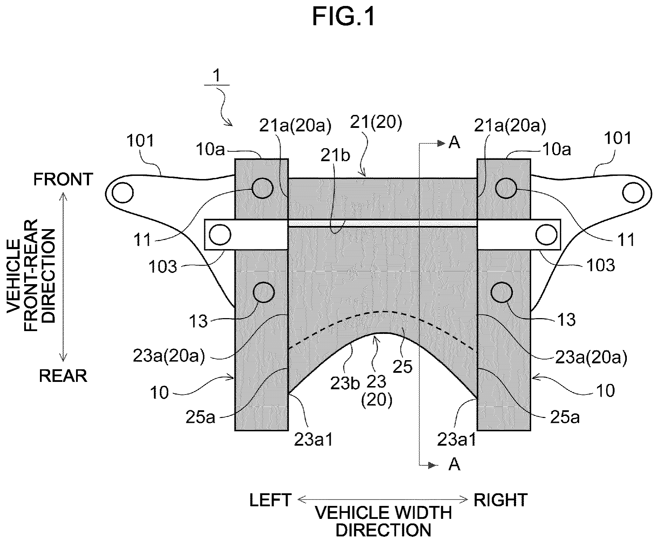

As illustrated in FIG. 1 as an example, a sub-frame structure 1 according to a first embodiment includes a side member 10 and a cross member 20. Still more, the sub-frame structure 1 is provided with a suspension arm 101 and an attachment portion 103 with an automotive body. Hereinafter, each component of the sub-frame structure 1 will be described. In the drawings of the present application, "front-rear" indicates a vehicle front-rear direction, "left-right" indicates a vehicle width direction (left and right directions with respect to a vehicle traveling direction), and "up-down" indicates a vehicle vertical direction.

<<Side member>>

As illustrated in FIG. 1, the side member 10 is a pair of left and right side members extending in the vehicle front-rear direction and provided with suspension arm connecting portions 11 and 13 at two positions in the vehicle front-rear direction.

<<Cross member>>

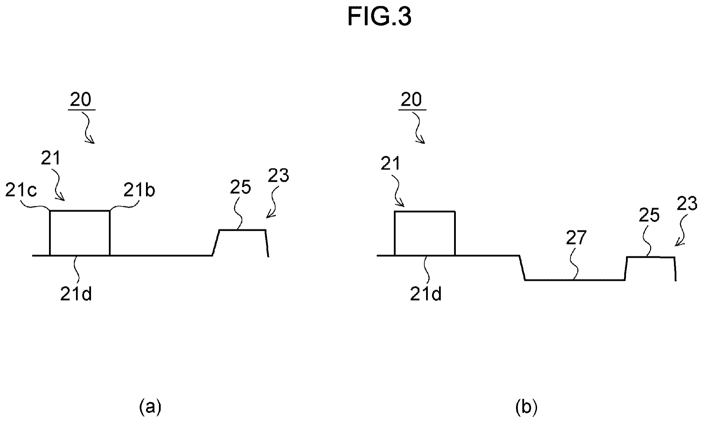

As illustrated in FIG. 1, the cross member 20 extends in the vehicle width direction, has both ends 20a connected to the left and right side members 10, and includes a substantially rectangular cross-section hollow member 21 and a panel member 23. FIG. 3(a) is a cross-sectional view of the cross member 20 taken along line A-A in FIG. 1.

(Substantially rectangular cross-section hollow member)

As illustrated in FIG. 1, the substantially rectangular cross-section hollow member 21 is disposed on a straight line connecting the suspension arm connecting portions 11 on the vehicle front side of the left and right side members 10, and is a hollow member having a substantially rectangular cross-section in a cross-section orthogonal to the vehicle width direction. Both ends 21a are connected to the side members 10.

(Panel member)

As illustrated in FIG. 1, the panel member 23 is formed in a panel shape from a metal sheet, and is disposed rearward of the substantially rectangular cross-section hollow member 21. In the panel member 23, side edges 23a are respectively connected to the left and right side members 10 such that a rear end 23a1 of the side edge 23a in the vehicle width direction is located rearward of the suspension arm connecting portion 13 on the vehicle rear side.

Furthermore, the panel member 23 includes a bead portion 25 that is convexly curved to the vehicle front side from rearward of the suspension arm connecting portion 13 on the vehicle rear side toward the center in the vehicle width direction. The bead portion 25 is formed such that a bead width gradually increases from the center of the curve toward both ends 25a. The bead width is a width in a cross section orthogonal to a direction along the curve of the bead portion 25.

<<Effects>>

Effects of the sub-frame structure 1 according to the first embodiment are described below. Since the substantially rectangular cross-section hollow member 21 is disposed on the straight line connecting the left and right suspension arm connecting portions 11 on the vehicle front side, the substantially rectangular cross-section hollow member 21 is located near the front end 10a of the side member 10 that is connected to the automotive body on the vehicle front side and to which a load is input. As a result, the stiffness is effectively improved against the input load modes (FIGS. 2(b) (i) to (iii)) in which a load is input to the front end 10a of the side member 10, in addition to the input load mode (FIGS. 2(a) (i) to (iii)) in which a load is input to the suspension arm connecting portions 11 and 13.

Still more, the panel member 23 is disposed rearward of the substantially rectangular cross-section hollow member 21, and the side edges 23a in the vehicle width direction are respectively connected to the left and right side members 10 such that the rear end 23a1 is located rearward of the suspension arm connecting portion 13 on the vehicle rear side. As a result, the left and right side members 10 on the rear side of the substantially rectangular cross-section hollow member 21 and the panel member 23 can be integrated, and the stiffness against various input load modes illustrated in FIGS. 2(a) and (b) can be improved.

Furthermore, the panel member 23 has the bead portion 25 that is curved in a convex shape toward the front side of the vehicle and is formed such that the bead width gradually increases from the center of the curve toward the both ends. As a result, it is possible to increase the stiffness against the input load mode of transverse bending illustrated in FIG. 2(b) (ii) and the input load mode of folding deformation illustrated in FIG. 2(b) (iii).

As described above, in the sub-frame structure 1 of an automobile according to the first embodiment, the stiffness against various input load modes can be improved. Still more, in the sub-frame structure 1 of an automobile according to the first embodiment, by improving the stiffness against various input load modes to suppress deformation, improvement in collision strength, single-input strength (deformation strength against a single load input), and fatigue strength can also be expected. Furthermore, by reducing the sheet thickness of each automotive part so as to offset the improvement in stiffness, it is also possible to reduce the weight while maintaining the same structure as a conventional sub-frame structure. Stiffness improvement by the sub-frame structure according to the first embodiment was verified through Example 1 described later.

In the sub-frame structure 1 according to the first embodiment, the substantially rectangular cross-section hollow member 21 is preferably disposed so as to connect the right and left suspension arm connecting portions 11 on the vehicle front side. Accordingly, the stiffness against an input load from the suspension arm connecting portions 11 can be effectively improved.

Still more, the substantially rectangular cross-section hollow member 21 is preferably disposed such that a corner 21c of the substantially rectangular cross-section (see FIG. 3(a)) on the vehicle front side is located on the vehicle front side with respect to the suspension arm connecting portion 11. This makes it possible to effectively utilize a space obtained by electrification of the automobile.

In the sub-frame structure 1 illustrated in FIG. 1, in the panel member 23, a rear edge 23b in the vehicle front-rear direction is curved in a convex shape toward the vehicle front side from both ends to the center in the vehicle width direction, and the bead portion 25 is formed along the curve of the rear edge 23b. This is preferable because the stiffness of the sub-frame structure 1 can be improved and also the weight of the sub-frame structure 1 can be reduced.

In the present invention, a shape including a bead width and a bead height of the bead portion formed on the panel member is not particularly limited as long as the bead width gradually increases from the center to both ends of the curve. However, in order to increase the stiffness against the input load mode of transverse bending in which a load is input to the front end of the side member and the input load mode of folding deformation, it is preferable that the bead width at both ends of the curve is about 4 to 5 times the bead width at the center of the curve, and the bead width at both ends of the curve is about 90 mm to 120 mm. Still more, the bead height is preferably about 10 mm to 30 mm.

In the sub-frame structure according to the present invention, the panel member 23 can be formed of one metal sheet. In particular, as illustrated in FIG. 3, the panel member 23 and a bottom 21d of the substantially rectangular cross-section hollow member 21 are preferably formed by bulge forming of one metal sheet. As a result, it is possible to reduce the weight by decreasing the number of parts and improve the productivity.

As illustrated in FIG. 3(b), deep drawing may be performed to form a recess 27 in the panel member 23. By forming the recess 27 in this manner, parts such as a steering gear can be arranged in the recess 27. The stiffness of the sub-frame structure 1 can be improved, and also a limited space inside the vehicle can be effectively utilized.

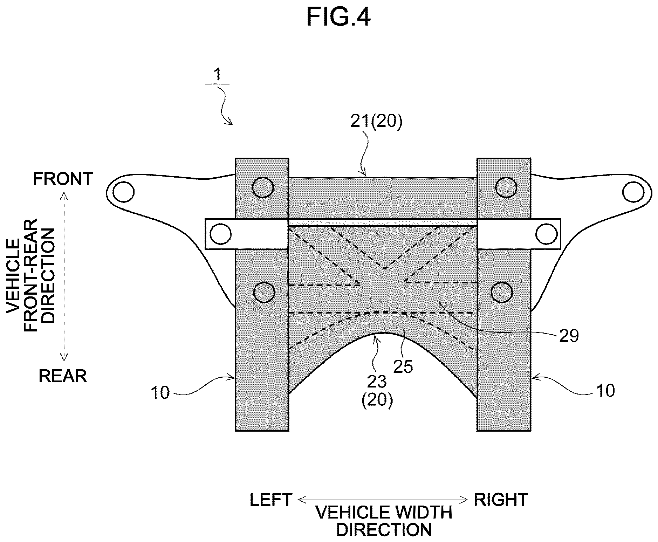

Further, as illustrated in FIG. 4, the panel member 23 is formed by adding a stiffening bead portion 29, so that the stiffness of the sub-frame structure 1 can be further improved easily.

In the sub-frame structure 1 illustrated in FIG. 1, an opening is provided on a side surface of the side member 10 on the vehicle outer side in the vehicle width direction, and the suspension arm 101 is inserted into the opening and connected to the suspension arm connecting portions 11 and 13. The sub-frame structure 1 described above has high stiffness and fatigue strength against the input load from the suspension arm 101. However, since the side member 10 cannot have a closed cross-section structure, there is a possibility that collision strength from the front of the vehicle cannot be secured.

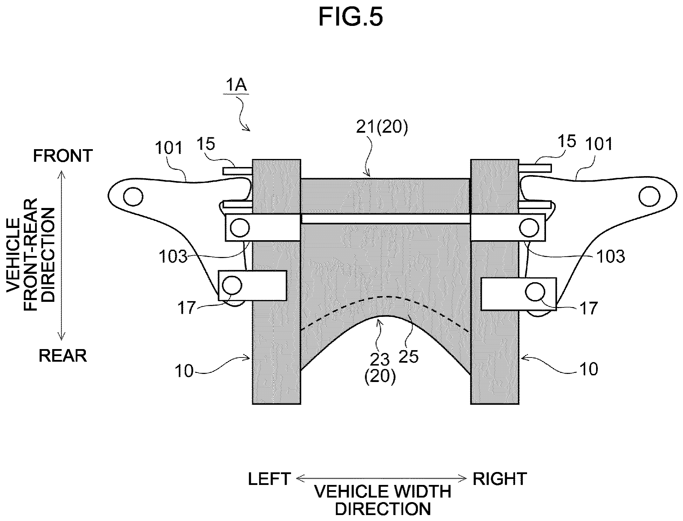

Therefore, as illustrated in FIG. 5, the present invention may have a sub-frame structure 1A in which a flange 15 is used as the suspension arm connecting portion for the side member 10 and the suspension arm 101. Also in the sub-frame structure 1A, the stiffness against the input load mode from the suspension arm connecting portion (flange 15 and suspension arm connecting portion 17) can be increased. Furthermore, the collision strength from the front of the vehicle can be improved.

[Second embodiment]

The sub-frame structure 1 according to the first embodiment described above improves stiffness against various input load modes during traveling of the vehicle. However, a sub-frame structure according to a second embodiment can be configured to improve not only the stiffness but also crashworthiness from a front surface of the vehicle.

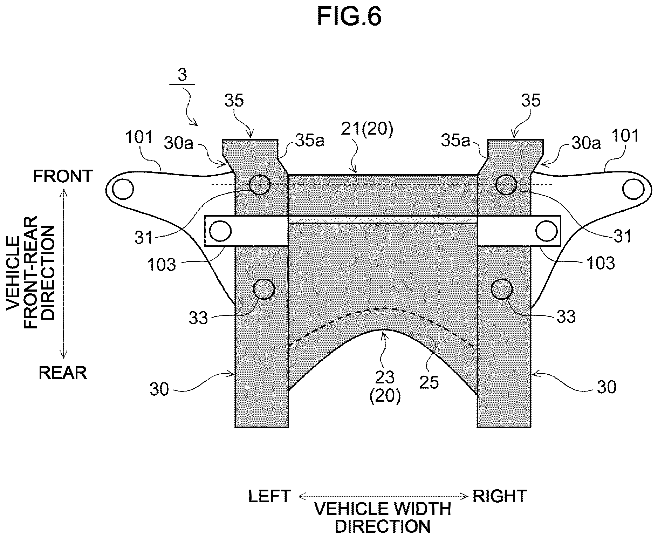

As illustrated in FIG. 6 as an example, a sub-frame structure 3 according to the second embodiment includes a side member 30 and a cross member 20. The cross member 20 extends in the vehicle width direction and has both ends connected to left and right side members 30 similarly to the above-described first embodiment (FIG. 1). The cross member 20 includes a substantially rectangular cross-section hollow member 21 and a panel member 23.

As illustrated in FIG. 6, the side member 30 is a pair of left and right side members extending in the vehicle front-rear direction and suspension arm connecting portions 31 and 33 are provided at two positions in the vehicle front-rear direction. A front end 30a of each of the side members 30 is provided with a hollow bending protrusion 35 that protrudes toward the vehicle front side beyond the substantially rectangular cross-section hollow member 21 and is bent in a crank shape while inclining outward in the vehicle width direction.

A valley portion 35a on the vehicle inner side of the bending protrusion 35 is a portion serving as a starting point where the bending protrusion 35 is crushed (plastically deformed) in the vehicle front-rear direction when a collision load is applied from the front of the vehicle at the time of a front crash. Therefore, in the bending protrusion 35 of the sub-frame structure 3, crashworthiness energy can be absorbed in the initial stage of crash before the side member 10 is plastically deformed. In the second embodiment, the substantially rectangular cross-section hollow member 21 and the panel member 23 can improve the stiffness against the front crash of the sub-frame structure 3 on the rear side of the bending protrusion 35 in the vehicle front-rear direction. Therefore, when a collision load is applied from the front of the vehicle at the time of a front crash, the bending protrusion 35 receives a reaction force from the sub-frame structure 3 and can be efficiently crushed (buckling deformation).

Further, the bending protrusion 35 in the vehicle front-rear direction may be set to a length necessary for absorbing the crashworthiness energy at the initial stage of crash. Therefore, the sub-frame structure 3 can also be preferably applied to a battery electric vehicle in which a trend of shorter nose at the vehicle front is progressing.

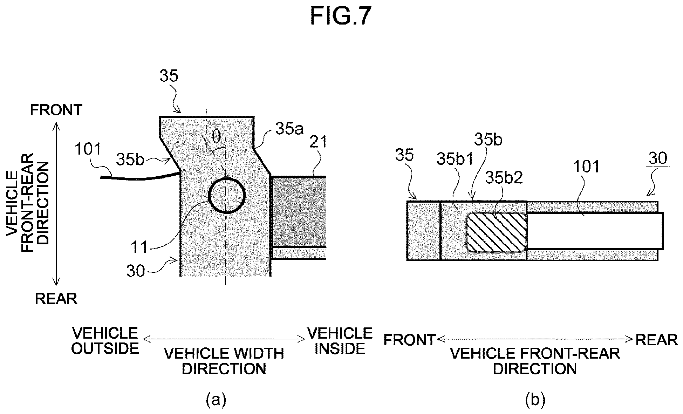

As illustrated in FIG. 7, the bending protrusion 35 preferably has an opening 35b2 formed on a side surface 35b1 of an inclined portion 35b inclined outward in the vehicle width direction. This will be described based on an analysis result of a deformation behavior in which the bending protrusion 35 is crushed by receiving the collision load from the vehicle front, obtained by performing a crashworthiness analysis in which a vehicle provided with the sub-frame structure 3 illustrated in FIG. 6 is subject to the front crash to a wall.

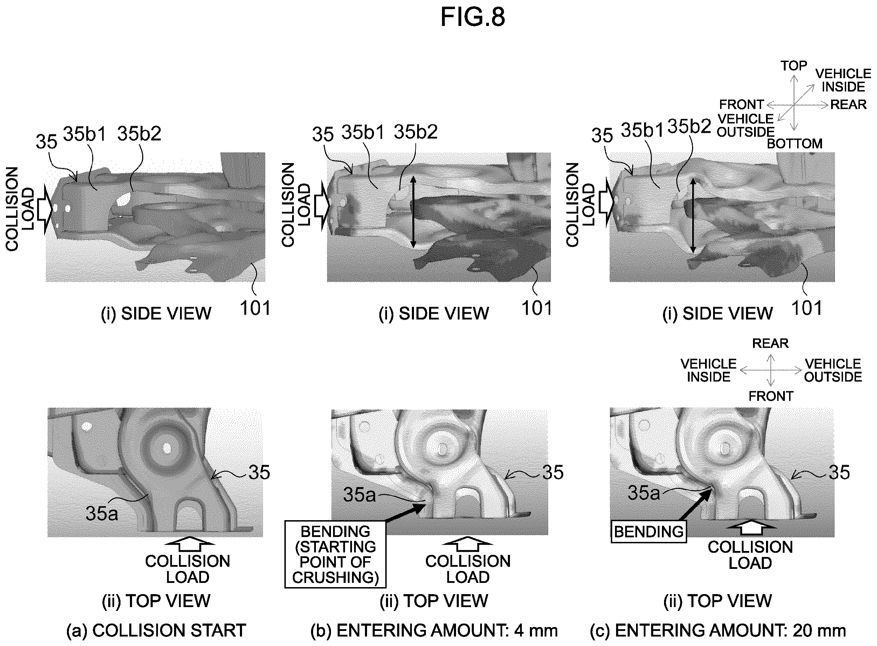

As illustrated in FIG. 7, the side surface 35b1 in which the opening 35b2 is formed faces the valley portion 35a serving as a starting point of crushing in the vehicle front-rear direction when the collision load is applied from the vehicle front (FIG. 8(a)). Therefore, when the collision load is applied from the vehicle front, the valley portion 35a of the bending protrusion 35 first starts to bend as the starting point of crushing (FIG. 8(b)). Then, when the collision progresses and the wall enters, the opening 35b2 provided in the side surface 35b1 on the vehicle outer side facing the valley portion 35a is crushed in the vehicle front-rear direction and deformed so as to spread in the vehicle vertical direction (arrows in FIGS. 8(b) to (c)).

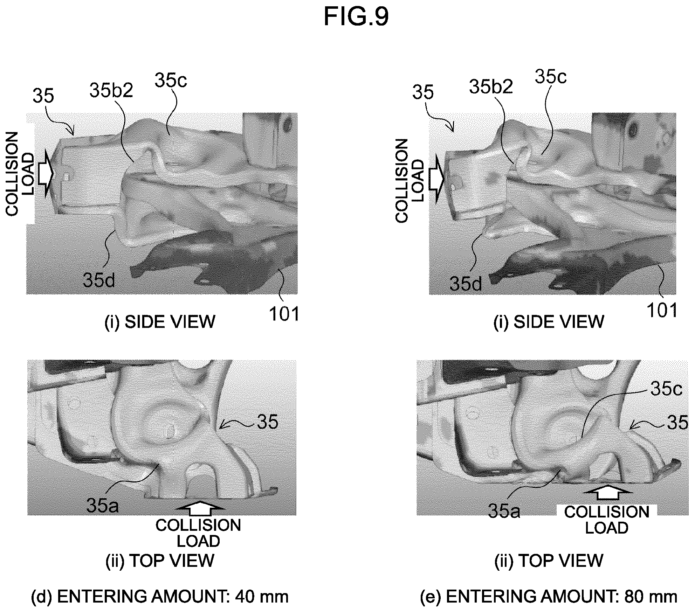

Due to the deformation of the opening 35b2, bending that has started from the valley portion 35a is promoted, and as illustrated in FIGS. 9(d) and (e), plastic deformation occurs and a top surface 35c and a bottom surface 35d of the bending protrusion 35 are crushed (buckling deformation) in a bellows shape as an entering amount of the wall progresses to 40 mm to 80 mm. As described above, by forming the opening 35b2 in the side surface on the vehicle outer side of the bending protrusion 35, it is possible to promote bellows-shaped crushing at the initial stage of crash and to increase absorption of the crashworthiness energy.

In order to stably cause crushing (buckling deformation) starting from the valley portion 35a, the bending protrusion 35 preferably has the inclined portion 35b with an inclination angle ($\theta$ in FIG. 7(a)) of 10° to 45° ($\theta$ = 30° in FIG. 7(a)) with respect to the vehicle front-rear direction.

When the inclination angle is smaller than 10°, a starting position where crushing occurs in the bending protrusion 35 fluctuates, and stable crushing may not occur. Still more, when the inclination angle is larger than 45°, a component of force of the collision load in the vehicle front-rear direction input to the tip of the bending protrusion 35 decreases, and absorption of the crashworthiness energy by crushing of the bending protrusion 35 in the vehicle front-rear direction decreases, which is not preferable.

Absorption of the crashworthiness energy by crushing of the bending protrusion 35 can be increased as a load (buckling strength) at the initial stage of crash at which crushing (buckling deformation) starts is higher. In order to improve the buckling strength of the bending protrusion 35, it is effective to suppress cross-section collapsing of the hollow bending protrusion 35 due to deformation of the opening 35b2.

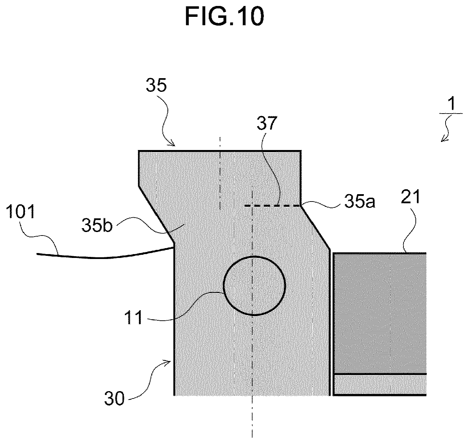

Therefore, as illustrated in FIG. 10, it is preferable that a hollow cross-section occlusion vertical wall 37 that connects the top surface and the bottom surface to close the whole or a part of the hollow cross-section is provided on the inner surface side of the valley portion 35a on the vehicle inner side in the bending protrusion 35. As a result, the buckling strength of the bending protrusion 35 can be improved, and absorption of the crashworthiness energy can be improved.

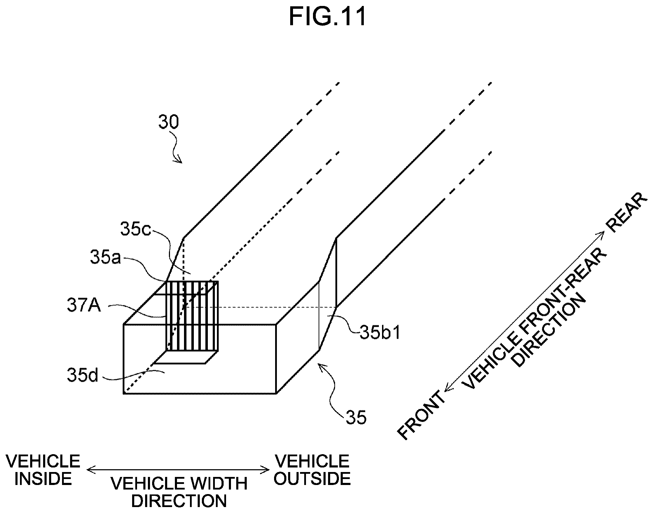

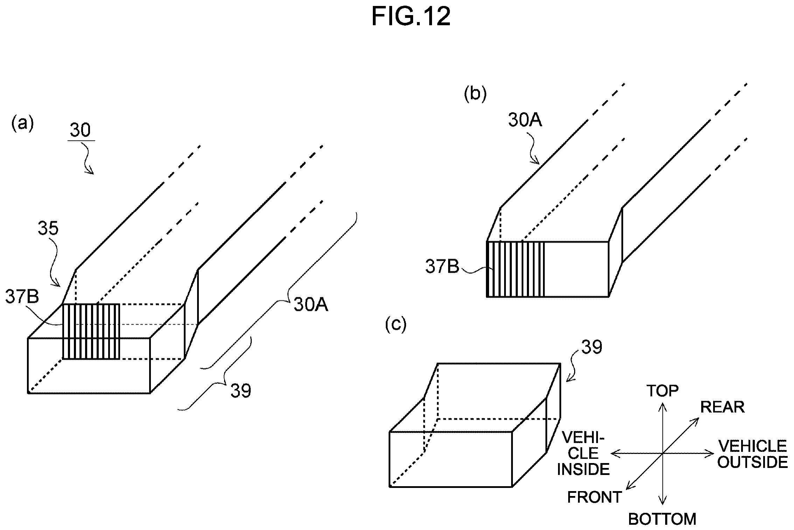

Specific structural examples of the bending protrusion 35 provided with the hollow cross-section occlusion vertical wall 37 are given in FIGS. 11 and 12(a).

FIG. 11 illustrates the bending protrusion 35 in which a patch part 37A is installed on the inner surface side of the valley portion 35a as the hollow cross-section occlusion vertical wall. On the other hand, in FIG. 12(a), a wall surface at a front end of a substantially hollow member 30A is bent to form a hollow cross-section occlusion vertical wall 37B (FIG. 12(b)), and a reinforcement part 39 (FIG. 12(c)) corresponding to the front end of the bending protrusion 35 is bonded.

The hollow cross-section occlusion vertical wall 37 preferably closes 1/3 (33%) or more of the hollow cross-section of the bending protrusion 35. When occlusion is less than 1/3, an effect of suppressing the cross-section collapsing of the bending protrusion 35 accompanying deformation of the opening 35b2 formed in the side surface 35b1 on the vehicle outer side of the bending protrusion 35 is small, and the buckling strength cannot be sufficiently improved.

Still more, it is preferable that the bending protrusion 35 has a shape in which a front end on the vehicle front side is closed. As a result, in the event of a front crash of the vehicle, it is possible to suppress deformation of the front end of the bending protrusion 35 and to prevent a decrease in the buckling strength. In order to form an open end in a closed shape, for example, a sheet-like member may be bonded to the front end of the bending protrusion 35.

In the sub-frame structure 3 according to the second embodiment, as described above, the bending protrusion absorbs the crashworthiness energy by being crushed at the initial stage of crash at which the collision load is input from the vehicle front. For this reason, the collision load input to the vehicle tends to be excessively high in a late stage of deformation after the bending protrusion has been completely crushed. Thus, a passenger injury value may increase due to an increase in the collision load. From this viewpoint, in the sub-frame structure according to the present invention, it is preferable to take measures such as providing a deformation induction bead behind the suspension arm connecting portion on the vehicle rear side in the side member in order to absorb the crashworthiness energy in the late stage of deformation and reduce the load.

In the automotive sub-frame structure according to the present invention, the side member is preferably made of a steel sheet having a tensile strength of 590 MPa class or more regardless of the presence of the bending protrusion. As a result, not only the collision strength at the vehicle front can be increased, but also the deformation strength and the fatigue strength can be improved. On the other hand, the material of the cross member is not particularly limited, and may be appropriately selected according to required collision strength and deformation strength.

[Example 1]

An investigation described below has been performed to verify the effect of the automotive sub-frame structure according to the present invention.

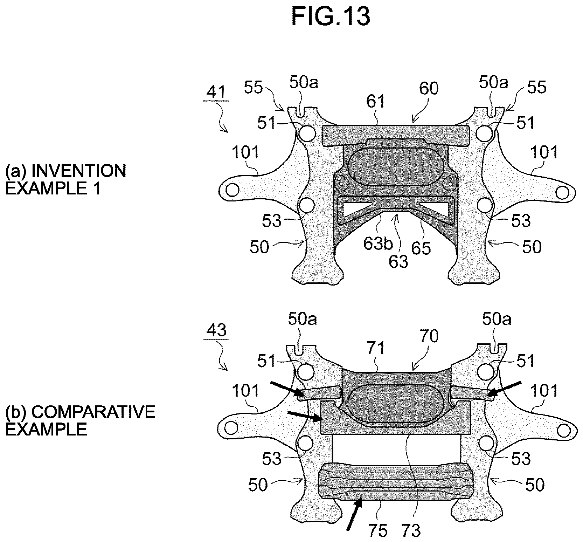

In Example 1, the stiffness of the automotive sub-frame structure illustrated in FIG. 13 was investigated. FIG. 13(a) illustrates a sub-frame structure 41 of Invention Example 1, and FIG. 13(b) illustrates a sub-frame structure 43 of Comparative Example.

Similarly to the sub-frame structure 1 (FIG. 1) described in the first embodiment, the sub-frame structure 41 according to Invention Example 1 includes a pair of left and right side members 50 and a cross member 60 extending in the vehicle width direction and having both ends connected to the side members. The cross member 60 includes a substantially rectangular cross-section hollow member 61 and a panel member 63.

As illustrated in FIG. 13(a), the substantially rectangular cross-section hollow member 61 is disposed on a straight line connecting suspension arm connecting portions 51 on the vehicle front side of the left and right side members 50.

The panel member 63 is disposed rearward of the substantially rectangular cross-section hollow member 61, and has a bead portion 65 formed along a rear side 63b that is convexly curved to the vehicle front side from both ends toward the center in the vehicle width direction. The bead portion 65 is formed such that a bead width gradually increases toward both ends 65a thereof.

As illustrated in FIG. 13(b), the sub-frame structure 43 according to Comparative Example includes the left and right side members 50 and a cross member 70. In the sub-frame structure 43 according to Comparative Example, the side members 50 are the same as those in Invention Example 1. On the other hand, as illustrated in FIG. 13(b), the cross member 70 includes a first cross member 71, a second cross member 73, and a third cross member 75. The first cross member 71 is a panel member, and is disposed so as to connect the suspension arm connecting portions 51 on the vehicle front side. On the other hand, the second cross member 73 and the third cross member 75 are hollow members having a substantially rectangular cross section, and are disposed so as to be separated from each other in the vehicle front-rear direction.

In the sub-frame structure 41 according to Invention Example 1, four parts (parts indicated by arrows in FIG. 13(b)) in the sub-frame structure 43 according to Comparative Example are removed, and the substantially rectangular cross-section hollow member 61 and the panel member 63 are provided as the cross member 60. The panel member 63 is formed by extending the first cross member 71 of Comparative Example toward the vehicle rear side.

In the sub-frame structure 41 according to Invention Example 1, a sheet thickness of the substantially rectangular cross-section hollow member 61 is 2.4 mm, a sheet thickness of the panel member 63 is 2.1 mm, and a sheet thicknesses of other parts (the side members 50 and the like) are the same as those of Comparative Example. The side members 50 of the sub-frame structure 41 according to Invention Example 1 and the sub-frame structure 43 according to Comparative Example were made of a steel sheet having a tensile strength of 590 MPa class.

In Example 1, the stiffness of each of the sub-frame structure 41 according to Invention Example 1 and the sub-frame structure 43 according to Comparative Example was evaluated for each input load mode illustrated in FIG. 2.

Then, a stiffness improvement rate of the sub-frame structure 41 according to Invention Example 1 was calculated from the stiffness obtained for each of Invention Example 1 and Comparative Example. The stiffness improvement rate is an improvement rate of stiffness in Invention Example 1 based on the stiffness of the conventional Example, and was calculated by the following formula.

Stiffness improvement rate [%] = (Stiffness of Invention Example 1 - Stiffness of Comparative Example)/(Stiffness of Comparative Example) $\times$ 100

Table 1 indicates results of the stiffness improvement rate of the sub-frame structure according to Invention Example 1 with respect to Comparative Example.

[Table 1]

Table 1

|  | Input load mode | Stiffness improvement rate (%) |
|---|---|---|
| FIG. 2 (a) (i) | Arm X | 3.1 |
| FIG. 2 (a) (ii) | Arm Y | 3.0 |
| FIG. 2 (a) (iii) | Arm Z | 2.0 |
| FIG. 2 (b) (i) | Torsion | 35.3 |
| FIG. 2 (b) (ii) | Transverse bending | 30.0 |
| FIG. 2 (b) (iii) | Folding | 32.4 |

As indicated in Table 1, in the sub-frame structure 41 according to Invention Example 1, all the input load modes of (a) and (b) illustrated in FIG. 2 resulted in improved stiffness. In particular, in the input load mode (FIGS. 2(b) (i) to (iii)) in which a load is input to a front end 50a of the side member 50 that is an attachment portion with the automotive body, the stiffness improvement rate increases by 30%. A remarkable improvement in the stiffness was confirmed.

[Example 2]

In Example 2, crashworthiness analysis was performed on a vehicle having the sub-frame structure 41 illustrated in FIG. 13(a), the target in Example 1, to investigate crashworthiness.

The sub-frame structure 41 includes the pair of left and right side members 50 and the cross member 60. The cross member 60 includes the substantially rectangular cross-section hollow member 61 and the panel member 63. Each of the side members 50 is provided with a hollow bending protrusion 55 that protrudes toward the vehicle front side beyond the substantially rectangular cross-section hollow member 61 and is bent in a crank shape while inclining outward in the vehicle width direction (see FIG. 13(a)). In the bending protrusion 55, an opening (not illustrated) is formed in a side surface on the vehicle outer side at an inclined portion inclined outward in the vehicle width direction with respect to the vehicle front-rear direction.

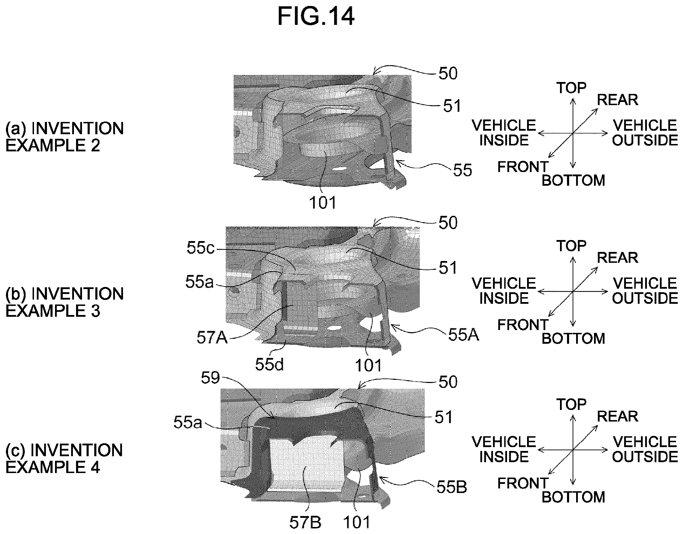

In Example 2, as illustrated in FIG. 14, the crashworthiness was investigated when a hollow cross-section occlusion vertical wall was provided inside the hollow bending protrusion 55 to improve the buckling strength. The bending protrusion 55 illustrated in FIG. 14(a) is not provided with the hollow cross-section occlusion vertical wall (Invention Example 2). A bending protrusion 55A illustrated in FIG. 14(b) is provided with a patch part 57A that connects a top surface 55c and a bottom surface 55d to close a part of a hollow cross section (43% > 33% of the hollow cross section of the bending protrusion 55A) on the inner surface side of a valley portion 55a on the vehicle inner side bent in a crank shape (See Invention Example 3 and FIG. 11). In a bending protrusion 55B illustrated in FIG. 14(c), a reinforcement part 59 corresponding to the front end of the bending protrusion 55B is bonded to a substantially hollow member whose inside (entire hollow cross section of the bending protrusion 55B) is occluded by a hollow cross-section occlusion vertical wall 57B formed by bending a part of the front end (See Invention Example 4 and FIG. 12).

In Example 2, vehicles having the sub-frame structures 41 according to Invention Examples 2 to 4 were analyzed, and the crashworthiness analysis was performed by making a rigid wall enter from the vehicle front in a state a fastening portion on the vehicle rear side (a rear end of the side member 30 in the vehicle front-rear direction in FIG. 6) is completely fixed.

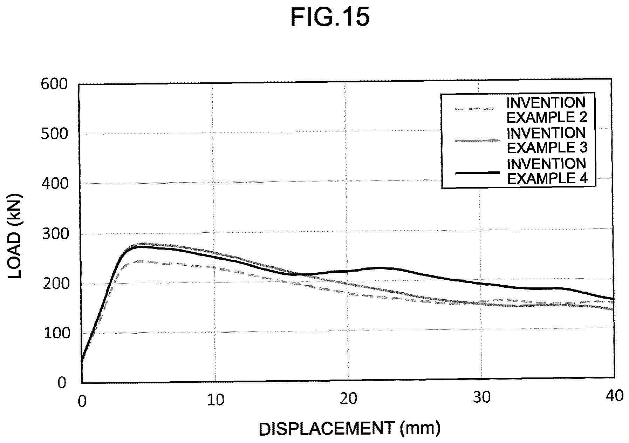

FIG. 15 illustrates load-displacement curves at the initial stage of crash obtained by the crashworthiness analysis of the vehicles having the sub-frame structures 41 according to Invention Examples 2 to 4. The load is a reaction force against the rigid wall that collides with the vehicle front and enters, and the displacement is an entering amount of the rigid wall to the automotive body side in the vehicle front-rear direction.

As illustrated in FIG. 15, the load increases as the rigid wall collides and the displacement increases, i.e., as the rigid wall enters. Then, after reaching a peak, the load gradually decreases.

When comparing Invention Examples 2 to 4, no large difference was found in an increase in the load immediately after the start of collision. However, in Invention Examples 3 and 4 in which the patch part 57A or the hollow cross-section occlusion vertical wall 57B is provided in the bending protrusion 55, peak values of the load were increased by 14% and 12%, respectively (Invention Example 2: 243 kN, Invention Example 3: 278 kN, Invention Example 4: 273 kN).

Based on the above results, it can be seen that the buckling strength of the bending protrusion 55 can be increased by providing the hollow cross-section occlusion vertical wall (patch part 57A or hollow cross-section occlusion vertical wall 57B) on the inner side of the valley portion 55a that is a starting point of crushing in the bending protrusion 55. Further, in Invention Examples 3 and 4, the load was higher than that in Invention Example 2 at the initial stage of crash from the start of collision to 40 ms, indicating that the crashworthiness energy was absorbed more.

Industrial Applicability

The present invention is capable of providing an automotive sub-frame structure having high stiffness against loads in various directions input from other automotive parts and attachment portions with the automotive body, in addition to a load input from the suspension arm.

Reference Signs List

1 SUB-FRAME STRUCTURE
1A SUB-FRAME STRUCTURE
3 SUB-FRAME STRUCTURE
10 SIDE MEMBER
10a FRONT END
11 SUSPENSION ARM CONNECTING PORTION
13 SUSPENSION ARM CONNECTING PORTION
15 FLANGE
17 SUSPENSION ARM CONNECTING PORTION
20 CROSS MEMBER
20a END
21 SUBSTANTIALLY RECTANGULAR CROSS-SECTION HOLLOW MEMBER
21a END
21b CORNER
21c CORNER
21d BOTTOM
23 PANEL MEMBER
23a SIDE EDGE
23a1 REAR END
23b REAR EDGE
25 BEAD PORTION

25a BOTH ENDS
27 RECESS
29 STIFFENING BEAD PORTION
30 SIDE MEMBER
31 SUSPENSION ARM CONNECTING PORTION
33 SUSPENSION ARM CONNECTING PORTION
35 BENDING PROTRUSION
35a VALLEY PORTION
35b INCLINED PORTION
35b1 SIDE SURFACE
35b2 OPENING
35c TOP SURFACE
35d BOTTOM SURFACE
37 HOLLOW CROSS-SECTION OCCLUSION VERTICAL WALL
37A PATCH PART
37B HOLLOW CROSS-SECTION OCCLUSION VERTICAL WALL
39 REINFORCEMENT PART
41 SUB-FRAME STRUCTURE
43 SUB-FRAME STRUCTURE
50 SIDE MEMBER
50a FRONT END
51 SUSPENSION ARM CONNECTING PORTION
53 SUSPENSION ARM CONNECTING PORTION
55, 55A, 55B BENDING PROTRUSION
55a VALLEY PORTION
55b INCLINED PORTION
55b1 SIDE SURFACE
55b2 OPENING
55c TOP SURFACE
55d BOTTOM SURFACE
57A PATCH PART
57B HOLLOW CROSS-SECTION OCCLUSION VERTICAL WALL
59 REINFORCEMENT PART
60 CROSS MEMBER
61 SUBSTANTIALLY RECTANGULAR CROSS-SECTION HOLLOW MEMBER
63 PANEL MEMBER
63a SIDE EDGE
63a1 REAR END
63b REAR EDGE
65 BEAD PORTION
70 CROSS MEMBER
71 FIRST CROSS MEMBER
73 SECOND CROSS MEMBER
75 THIRD CROSS MEMBER
101 SUSPENSION ARM
103 ATTACHMENT PORTION

## Claims

1.  An automotive sub-frame structure comprising:

    a pair of side members at left and right extending in a vehicle front-rear direction, each including suspension arm connecting portions at two positions in the vehicle front-rear direction; and
    a cross member extending in a vehicle width direction and having both ends connected to the side members at left and right, wherein
    the cross member includes:

a substantially rectangular cross-section hollow member that is hollow and has a substantially rectangular cross section, the substantially rectangular cross-section hollow member being disposed on a straight line connecting the suspension arm connecting portions at left and right on a vehicle front side, and
a panel member formed in a panel shape from a metal sheet, disposed rearward of the substantially rectangular cross-section hollow member, and having side edges connected to the side members at left and right such that rear ends of the side edges in the vehicle width direction are located rearward of the suspension arm connecting portions on a vehicle rear side,

the panel member includes a bead portion that is convexly curved to the vehicle front side from rearward of the suspension arm connecting portions on the vehicle rear side toward a center in the vehicle width direction, and
the bead portion is formed such that a bead width gradually increases from a center of the curve toward both ends.

2. The automotive sub-frame structure according to claim 1, wherein

the panel member has a rear edge that is convexly curved to the vehicle front side from both ends toward the center in the vehicle width direction, and
the bead portion is formed along the rear edge.

3. The automotive sub-frame structure according to claim 1 or 2, wherein
each of the side members has a front end provided with a bending protrusion that is hollow and protruding to the vehicle front side beyond the substantially rectangular cross-section hollow member, the bending protrusion being bent in a crank shape while inclining outward in the vehicle width direction.

4. The automotive sub-frame structure according to claim 3, wherein the bending protrusion has an opening formed in a side surface on a vehicle outer side at an inclined portion inclined outward in the vehicle width direction.

5. The automotive sub-frame structure according to claim 3 or 4, wherein the bending protrusion has a hollow cross-section occlusion vertical wall provided on an inner surface side of a valley portion on a vehicle inner side, the hollow cross-section occlusion vertical wall connecting a top surface and a bottom surface of the bending protrusion to close a part or all of a hollow cross-section.

6. The automotive sub-frame structure according to any one of claims 1 to 5, wherein the cross member is formed of a steel sheet having a tensile strength of 590 MPa class or more.

# FIG.1

# FIG.2

(i) X DIRECTION (Arm X)

(ii) Y DIRECTION (Arm Y)

(iii) Z DIRECTION (Arm Z)

(a) SUSPENSION ARM INPUT

(i) TORSION

(ii) TRANSVERSE BENDING

(iii) FOLDING DEFORMATION

(b) FRONT INPUT

**FIG.3**

(a)

(b)

# FIG.4

## FIG.5

# FIG.6

# FIG.7

(a)

(b)

# FIG.8

TOP
VEHICLE INSIDE
FRONT ←→ REAR
VEHICLE OUTSIDE
BOTTOM

COLLISION LOAD

35 35b1 35b2

(i) SIDE VIEW 101

COLLISION LOAD

35 35b1 35b2

(i) SIDE VIEW 101

COLLISION LOAD

35 35b1 35b2

(i) SIDE VIEW 101

REAR
VEHICLE INSIDE ←→ VEHICLE OUTSIDE
FRONT

35

35a

COLLISION LOAD

(ii) TOP VIEW

(a) COLLISION START

35

35a

BENDING (STARTING POINT OF CRUSHING)

COLLISION LOAD

(ii) TOP VIEW

(b) ENTERING AMOUNT: 4 mm

35

35a

BENDING

COLLISION LOAD

(ii) TOP VIEW

(c) ENTERING AMOUNT: 20 mm

EP 4 667 325 A1

# FIG.9

(i) SIDE VIEW

(ii) TOP VIEW

(d) ENTERING AMOUNT: 40 mm

(i) SIDE VIEW

(ii) TOP VIEW

(e) ENTERING AMOUNT: 80 mm

EP 4 667 325 A1

# FIG.10

# FIG.11

EP 4 667 325 A1

FIG.12

(a)

30

35

37B

30A

39

(b)

30A

37B

(c)

39

TOP

REAR

VEHI-
CLE
INSIDE

VEHICLE
OUTSIDE

FRONT

BOTTOM

EP 4 667 325 A1

# FIG.13

(a) INVENTION EXAMPLE 1

(b) COMPARATIVE EXAMPLE

# FIG.14

(a) INVENTION
EXAMPLE 2

50
51
55
101

TOP
REAR
VEHICLE INSIDE
VEHICLE OUTSIDE
FRONT
BOTTOM

(b) INVENTION
EXAMPLE 3

55c
55a
57A
55d
101
50
51
55A

TOP
REAR
VEHICLE INSIDE
VEHICLE OUTSIDE
FRONT
BOTTOM

(c) INVENTION
EXAMPLE 4

59
55a
57B
101
50
51
55B

TOP
REAR
VEHICLE INSIDE
VEHICLE OUTSIDE
FRONT
BOTTOM

# FIG.15

**EP 4 667 325 A1**

## INTERNATIONAL SEARCH REPORT

| | International application No. |
|---|---|
| | **PCT/JP2024/009544** |

### A. CLASSIFICATION OF SUBJECT MATTER

***B62D 21/00*** (2006.01)i
FI:  B62D21/00 A

According to International Patent Classification (IPC) or to both national classification and IPC

### B. FIELDS SEARCHED

Minimum documentation searched (classification system followed by classification symbols)

B62D21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-094588 A (TOYOTA JIDOSHA KABUSHIKI KAISHA) 22 May 2014 (2014-05-22) paragraphs [0021]-[0031], fig. 1-7 | 1-6 |
| A | JP 2017-136972 A (MAZDA MOTOR CORPORATION) 10 August 2017 (2017-08-10) paragraphs [0023]-[0025], fig. 1-9 | 1-6 |
| A | JP 2002-255059 A (MAZDA MOTOR CORPORATION) 11 September 2002 (2002-09-11) paragraphs [0025]-[0041], fig. 1-9 | 1-6 |
| A | JP 2020-023243 A (TOYOTA JIDOSHA KABUSHIKI KAISHA) 13 February 2020 (2020-02-13) paragraph [0037], fig. 1-8 | 1-6 |
| A | JP 2000-272535 A (MITSUBISHI JIDOSHA KOGYO KABUSHIKI KAISHA) 03 October 2000 (2000-10-03) paragraphs [0015]-[0018], fig. 1-5 | 1-6 |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 May 2024** | **28 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

28

**INTERNATIONAL SEARCH REPORT**

| International application No. |
| --- |
| **PCT/JP2024/009544** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2012-214211 A (HONDA MOTOR CO., LTD.) 08 November 2012 (2012-11-08) paragraphs [0031]-[0066], fig. 1-18 | 1-6 |

Form PCT/ISA/210 (second sheet) (July 2022)

## INTERNATIONAL SEARCH REPORT
### Information on patent family members

International application No.

**PCT/JP2024/009544**

| Patent document cited in search report | | | Publication date (day/month/year) | Patent family member(s) | | | Publication date (day/month/year) |
|---|---|---|---|---|---|---|---|
| JP | 2014-094588 | A | 22 May 2014 | US fig. 1-7 | 2014/0125030 | A1 | |
| | | | | CN fig. 1-7 | 103802890 | A | |
| JP | 2017-136972 | A | 10 August 2017 | US fig. 1-9 | 2017/0225718 | A1 | |
| | | | | DE fig. 1-9 | 102017000464 | A1 | |
| | | | | CN fig. 1-9 | 107031726 | A | |
| JP | 2002-255059 | A | 11 September 2002 | (Family: none) | | | |
| JP | 2020-023243 | A | 13 February 2020 | US fig. 1-8 | 2020/0047811 | A1 | |
| | | | | DE fig. 1-8 | 102019116377 | A1 | |
| | | | | CN fig. 1-8 | 110861711 | A | |
| JP | 2000-272535 | A | 03 October 2000 | KR fig. 1-5 | 10-2000-0063026 | A | |
| JP | 2012-214211 | A | 08 November 2012 | US fig. 1-18 | 2012/0248820 | A1 | |

Form PCT/ISA/210 (patent family annex) (July 2022)

**REFERENCES CITED IN THE DESCRIPTION**

**Patent documents cited in the description**

- JP 2020050213 A
- JP 2022074054 A
- JP 2020164094 A